# EUROPÄISCHE PATENTANMELDUNG

(11) **EP 1 626 322 A1**
(43) Veröffentlichungstag der Anmeldung: **15.02.2006**
(21) Anmeldenummer: 05106065.5
(22) Anmeldetag: 05.07.2005
(51) Int. Cl.: G05F 3/08, B60R 16/02

(54) **Verfahren zum Verwalten des Energiebedarfs elektrischer Verbraucher in einem elektrischen Netz**

(30) Priorität: 10.08.2004 DE 102004038741
(71) Anmelder: Robert Bosch GmbH, 70442 Stuttgart (DE)
(72) Erfinder: Vollmer, Vasco, 31162, Bad Salzdetfurth (DE); Gottwald, Gerd, 72827, Wannweil (DE)

(57) **Zusammenfassung**

Die Erfindung betrifft ein Verfahren zum Verwalten des Energiebedarfs elektrischer Verbraucher (2-4) in einem elektrischen Netz (7), insbesondere einem Kfz-Bordnetz. Das elektrische Netz (7) kann besonders kostengünstig ausgelegt werden, wenn ein Energiemanagement durchgeführt wird, bei dem eine Leistungs-Spezifikations-Nachricht (10) und eine Prioritätsinformation von wenigstens einem Verbraucher (2-4) an eine zentrale Verwaltungseinrichtung (1) übertragen wird, wobei die Verwaltungseinrichtung (1) die empfangenen Daten verarbeitet und in Abhängigkeit von der Auslastung des elektrischen Netzes (7), der Leistungsspezifikation und der Priorität des Verbrauchers (2-4) dem Verbraucher eine bestimmte Energiemenge zuordnet, und die Verwaltungseinrichtung (1) ein Steuersignal an eine dem Verbraucher (2-4) zugeordnete Kommunikationseinheit (5) überträgt, mit dem Leistung des Verbrauchers (2-4) eingestellt wird.

## Beschreibung

Die Erfindung betrifft ein Verfahren zum Verwalten des Energiebedarfs elektrischer Verbraucher in einem elektrischen Netz, insbesondere einem Kfz-Bordnetz, gemäß dem Oberbegriff des Patentanspruchs 1, sowie ein entsprechend eingerichtetes Bordnetz gemäß dem Oberbegriff des Patentanspruchs 9.

Herkömmliche Kfz-Bordnetze umfassen eine Vielzahl elektrischer Verbraucher, die von einer Batterie und einem Generator mit elektrischer Energie versorgt werden. Der Kfz-Generator ist aus Kostengründen üblicherweise nicht auf die volle Verbrauchsleistung ausgelegt, da selten alle Verbraucher gleichzeitig eingeschaltet sind. Bei einer hohen Auslastung des elektrischen Bordnetzes kann es daher zu Spannungseinbrüchen kommen, wenn weitere Verbraucher zugeschaltet werden. Ein typisches Anzeichen eines überlasteten Bordnetzes ist beispielsweise das Flackern des Fahrzeuglichts. Spannungssensible Verbraucher können in diesem Zustand gestört werden oder ganz ausfallen. Wenn sicherheitsrelevante Einrichtungen, wie z.B. Steuergeräte, betroffen sind, besteht dadurch ein erhöhtes Sicherheitsrisiko.

Um dies zu vermeiden, ist es bekannt, mit Hilfe eines Steuergeräts ein einfaches Energiemanagement durchzuführen, bei dem die Netzspannung ständig überwacht und bei Unterschreiten eines vorgegebenen Schwellenwerts ein oder mehrere elektrische Verbraucher mit geringer Priorität (geringer Wichtigkeit) ausgeschaltet oder gedimmt werden, um das elektrische Bordnetz zu entlasten. Eine elektrische Heckscheibenheizung oder eine Sitzheizung kann somit zugunsten eines anderen Verbrauchers mit höherer Priorität, wie z.B. eines Turboladers, ausgeschaltet werden. Ein derartiges Energie- und Verbrauchermanagement hat jedoch den Nachteil, dass das elektrische Bordnetz ständig überwacht werden und beim Einschalten eines zusätzlichen Verbrauchers unmittelbar reagiert werden muss. Das System reagiert dabei erst in einem kritischen Zustand, nämlich erst dann, wenn bereits ein zusätzlicher Verbraucher zugeschaltet wurde.

Es ist daher die Aufgabe der vorliegenden Erfindung, das Energiemanagement in einem elektrischen Netz, insbesondere in einem Kfz-Bordnetz, zu verbessern.

Gelöst wird diese Aufgabe gemäß der Erfindung durch die im Patentanspruch 1 sowie im Patentanspruch 9 angegebenen Merkmale. Weitere Ausgestaltungen der Erfindung sind Gegenstand von Unteransprüchen.

Ein wesentlicher Aspekt der Erfindung besteht darin, neben dem elektrischen Netz ein Kommunikationsnetz vorzusehen, an dem die elektrischen Verbraucher bzw. ihnen zugeordnete Kommunikationseinheiten und eine Verwaltungseinrichtung angeschlossen sind. In diesem Netzwerk senden die elektrischen Verbraucher, noch bevor sie tatsächlich zugeschaltet oder hochgeregelt werden, eine Leistungs-Spezifikations-Nachricht und eine Prioritätsinformation an die zentrale Verwaltungseinrichtung. Die Verwaltungseinheit ordnet dem Verbraucher in Abhängigkeit von der Auslastung des elektrischen Netzes und der Priorität des Verbrauchers dann eine bestimmte Energiemenge zu und erfüllt die Leistungsanforderung des elektrischen Verbrauchers entweder ganz, teilweise oder gar nicht.

Die Leistungs-Spezifikations-Nachricht spezifiziert den zukünftigen Leistungsbedarf des Verbrauchers. Unter der Bezeichnung "Leistungs-Spezifikations-Nachricht" wird dabei eine Nachricht, die selbst eine Angabe über die benötigte Leistung enthält, oder eine äquivalente Information verstanden (wie z.B. eine Leistungsanforderung oder eine Identnummer) aufgrund derer die Verwaltungseinrichtung eine zugehörige Leistungsspezifikation aus einem lokalen Speicher ausliest. Für die Prioritätsinformation gilt entsprechendes. Die Verwaltungseinrichtung verarbeitet die Daten und ordnet dem Verbraucher in Abhängigkeit von der Auslastung des elektrischen Netzes, der Leistungsspezifikation und der Priorität des Verbrauchers eine bestimmte Energiemenge zu. Die Verwaltungseinrichtung überträgt dann ein entsprechendes Steuersignal an die Kommunikationseinheit oder direkt an eine Stelleinrichtung des Verbrauchers. Eine dem Verbraucher zugeordnete Stelleinrichtung, wie z.B. ein Schalter, Dimmer oder eine Steuerelektronik, stellt dann basierend auf dem Steuersignal die entsprechende Verbrauchsleistung ein. Dieses Verfahren bzw. das entsprechend ausgelegte Bordnetz hat den wesentlichen Vorteil, dass der Energiebedarf reguliert und zeitlich entzerrt werden kann. Dadurch wird es möglich, das elektrische Netz besser auszunutzen und die Energiequellen, wie z.B. einen Kfz-Generator, schwächer auszulegen und somit Kosten einzusparen.

Das Kommunikationsnetz kann als physisch separates Netz, wie z.B. als ein digitales Bussystem, ausgelegt sein. Alternativ kann auch das elektrische Netz als Kommunikationsnetz verwendet werden und die Signale und Daten über das elektrische Netz gesendet werden (sogenannte Power Line Communication PLC).

Bei Verbrauchern mit konstantem Energiebedarf, die entweder ein- oder ausgeschaltet sein können, enthält die (übertragene oder aus einem Speicher ausgelesene) Leistungs-Spezifikation wenigstens eine Angabe über die Nennleistung des Verbrauchers. Bei Verbrauchern mit variablem Leistungsbedarf enthält die Leistungs-Spezifikation vorzugsweise eine Angabe über den mittleren, maximalen und/oder minimalen Leistungsbedarf des Verbrauchers.

Die Leistungs-Spezifikation umfasst vorzugsweise auch eine Angabe über den Zeitraum des Leistungsbedarfs und/oder eine Änderung des Leistungsbedarfs, wie z.B. Informationen über das Einschalt- oder Ausschaltverhalten des Verbrauchers.

Darüber hinaus kann die Leistungs-Spezifikation auch zusätzliche Parameter bezüglich des Leistungsverbrauchs oder der Priorität des Verbrauchers umfassen. Dadurch kann beispielsweise die Abhängigkeit der Priorität von Fahrzeug-, Straßen- oder Insassenzuständen oder die Abhängigkeit der Priorität von verschiedenen Stufen der Energieversorgung mitgeteilt werden.

Die Leistungs-Spezifikations-Nachricht kann entweder konkrete Werte für den Leistungsbedarf bzw. die Priorität des Verbrauchers oder Angaben enthalten, aus denen der Leistungsbedarf bzw. die Priorität des Verbrauchers abgeleitet werden kann. So ist es beispielsweise möglich, nur eine Identifikationsnummer, wie z.B. den Typ eines Fensterheber-Motors oder einen Einschaltbefehl an die Verwaltungseinrichtung zu übertragen, die aufgrund der Identifikationsnummer den Leistungsbedarf und/oder die Priorität des Fensterheber-Motors z.B. aus einem Speicher ausliest. Solche Nachrichten seitens der Verbraucher an die Verwaltungseinrichtung sollen hier auch als Leistungs-Spezifikations-Nachrichten gelten, auch wenn sie nicht unmittelbar Angaben über den zukünftigen Leistungsbedarf des Verbrauchers enthalten.

Zur Erkennung der Auslastung bzw. Leistungsfähigkeit des Bordnetzes können verschiedene charakteristische Größen des Bordnetzes 7 überwacht und ausgewertet werden, wie z.B. die Bordnetzspannung U_{Bn}, der Ladezustand (SOC) oder der Alterungszustand (SOH) der Batterie, die Batterietemperatur T_{Bat} und/oder die Generatorauslastung (sogenanntes DF-Signal). Aus dem Stand der Technik sind verschiedenste Methoden bekannt, um die Leistungsfähigkeit des elektrischen Bordnetzes abzuschätzen.

Gemäß einer bevorzugten Ausführungsform der Erfindung nutzt die Verwaltungseinheit zum Zwecke des Energiemanagements Scheduling-Strategien, wie sie aus der Telekommunikationstechnik bekannt sind, wie z.B. das aus der Telekommunikationstechnik bekannte Round-Robin-Verfahren oder statistisches Multiplexing. Dadurch kann eine wesentlich höhere Effizienz bei der Auslegung von Energienetzen erreicht werden. Darüber hinaus ist es möglich, im Fehlerfall z.B. Ausweichrouten (bei redundanter Anbindung) festzulegen und somit die Ausfallsicherheit zu erhöhen.

Die Verwaltungseinheit ist vorzugsweise derart programmiert, dass sie nicht nur ein Steuersignal an denjenigen Verbraucher zurücksendet, von dem sie eine Leistungsanfrage erhalten hat, sondern in Reaktion auf eine solche Leistungsanfrage auch andere Verbraucher zu Zwecken des Energiemanagements ansteuern kann. Dadurch wird es möglich, bei einer Leistungsanfrage eines Verbrauchers mit hoher Priorität, andere Verbraucher zu dimmen oder ganz auszuschalten, um deren Energieverbrauch zugunsten des anderen Verbrauchers zu reduzieren.

Sämtliche Verbraucher sind vorzugsweise über einen Datenbus, insbesondere einen digitalen Datenbus, wie z.B. einen CAN-Bus, mit der Verwaltungseinheit verbunden.

Ein elektrisches Netz, wie z.B. ein Kfz-Bordnetz, das erfindungsgemäß zur Durchführung eines Energie- und Kommunikations-Managements eingerichtet ist, umfasst mehrere elektrische Verbraucher und eine Verwaltungseinrichtung, die miteinander in Kommunikationsverbindung stehen, wobei die Verwaltungseinrichtung zur Durchführung des Energie- und Verbrauchermanagements entsprechend programmiert ist.

Die Erfindung wird nachstehend anhand der beigefügten Zeichnungen beispielhaft näher erläutert. Es zeigen:
Fig. 1 ein elektrisches Kfz-Bordnetz zur Durchführung eines Energie- und Kommunikationsmanagements; und
Fig. 2 die wesentlichen Verfahrensschritte bei der Durchführung eines elektrischen Energiemanagements im elektrischen Netz von Fig. 1.

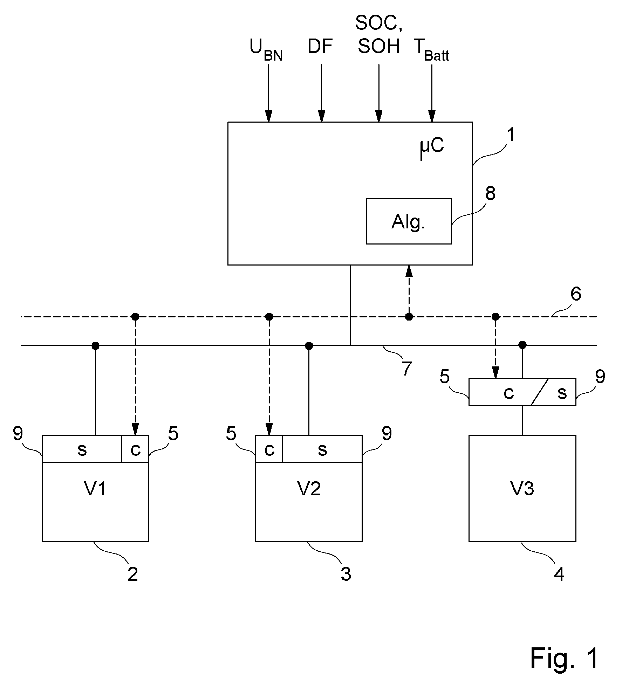

Fig. 1 zeigt ein Kfz-Bordnetz mit mehreren Verbrauchern 2,3,4 und einer Verwaltungseinrichtung 1, wie z.B. einem Steuergerät, die an einer gemeinsamen Versorgungsleitung 7 angeschlossen sind. Das elektrische Netz wird von einer Batterie und einem Generator (nicht gezeigt) mit elektrischer Energie versorgt. Jeder der Verbraucher 2-4 umfasst ferner eine Kommunikationseinheit 5, die dem Datenaustausch mit der Verwaltungseinrichtung 1 dient und an einem gemeinsamen Datenbus 6, wie z.B. einem CAN-Bus angeschlossen ist. (Wahlweise könnte die Kommunikation auch über das elektrische Netz erfolgen).

Die Kommunikationseinheit 5 kann entweder im Verbraucher 2,3,4 integriert oder separat zum Verbraucher angeordnet sein, wie dies im Falle des Verbrauchers 4 dargestellt ist. Die Kommunikationseinheiten 5 sind ferner jeweils mit einer zugehörigen Stelleinrichtung 9, wie z.B. einem Schalter, einem Relais, einer Steuerelektronik, einem Dimmer, etc., verbunden, mit der die Leistung des jeweiligen Verbrauchers 2-4 eingestellt werden kann.

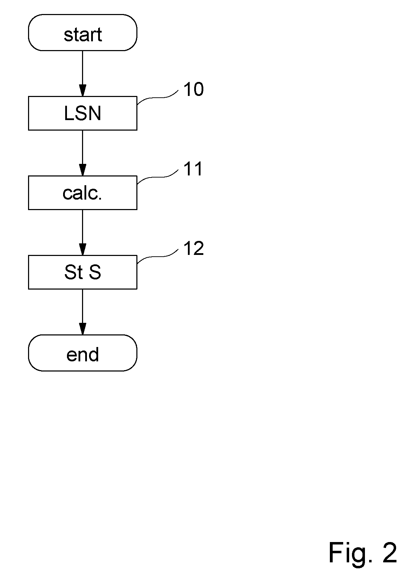

Zur Durchführung eines intelligenten Energie- und Kommunikationsmanagements umfasst das Steuergerät 1 einen EEM-Algorithmus 8 (EEM: Elektrisches Energie Management), der im wesentlichen wie in Fig. 2 dargestellt arbeitet:

Wenn einer der Verbraucher 2-4 eingeschaltet werden soll (nach einer manuellen oder automatischen Einschalt-Anforderung) oder mehr Leistung benötigt, erzeugt dieser Verbraucher 2-4 zunächst eine Leistungs-Spezifikations-Nachricht (Schritt 10), und überträgt diese Nachricht mit Hilfe seiner Kommunikationseinheit 5 über den Datenbus 6 an das Steuergerät 1. Die Leistungs-Spezifikations-Nachricht kann entweder selbst eine Angabe über den elektrischen Leistungsbedarf des Verbrauchers 2-4 enthalten oder nur einen Leistungsbedarf dem Grunde nach anfordern, so dass das Steuergerät 1 die zugehörige Leistungsspezifikation aus einem Speicher ausliest. Bei einer vom Steuergerät initiierten automatischen Einschaltanforderung wird keine Nachricht vom betreffenden Verbraucher 2-4 übertragen und das Steuergerät liest nur die Leistungs-Spezifikation aus dem Speicher aus.

Im Falle eines Verbrauchers 2-4 mit konstanter Nennleistung, wie z.B. der Fahrzeugbeleuchtung, wird die benötigte Nennleistung oder eine äquivalente Information übermittelt. Regelbare Verbraucher mit variablem Energiebedarf, wie z.B. eine Sitzheizung, übermitteln beispielsweise einen minimalen, maximalen und/oder mittleren Energiebedarf (z.B. in Watt oder Ampere) oder einen äquivalenten Wert. Die Leistungs-Spezifikations-Nachricht kann ferner Angaben über den Zeitraum der maximalen oder minimalen Energieentnahme oder Angaben über das zeitliche Verhalten des Energiebedarfs, wie z.B. das Einschalt- oder Ausschaltverhalten, umfassen.

Neben der Leistungsspezifikation wird in jedem Fall auch eine Prioritätsinformation übertragen bzw. aus einem Speicher ausgelesen, anhand derer die Wichtigkeit der einzelnen Verbraucher 2-4 unterschieden werden kann. Somit ist es möglich, wichtigen Verbrauchern bei Ressourcenknappheit den Vorzug zu geben.

Die Leistungs-Spezifikation kann ferner weitere Parameter umfassen, wenn der Leistungsbedarf oder die Priorität wiederum abhängig von anderen Größen sind. So kann beispielsweise die Abhängigkeit der Priorität von Fahrzeug-, Straßen- oder Insassenzuständen oder die Abhängigkeit der Priorität von verschiedenen Betriebsmodi des Verbrauchers enthalten sein.

Das Steuergerät 1 verarbeitet die empfangenen Daten und teilt dem Verbraucher 2-4 eine bestimmte Energiemenge zu, die von der Auslastung des elektrischen Netzes, der Leistungsspezifikation und der Priorität des Verbrauchers abhängt. Die dem Verbraucher zugeordnete Leistung wird dann mittels einer Stelleinrichtung 9 am Verbraucher 2-4 eingestellt. Das Steuergerät 1 überträgt zu diesem Zweck ein Steuersignal an die Kommunikationseinheit 5 des Verbrauchers 2-4, die mit der Stelleinrichtung 9 zusammenwirkt.

Die Funktionsweise der erfindungsgemäßen Energieverwaltung wird im Folgenden anhand zweier Beispiele näher erläutert:

### Beispiel 1

Das elektrische Netz 7 umfasst ein Steuergerät 1, einen Verbraucher 2 mit hoher Priorität und konstantem Strombedarf (Beleuchtung), einen Verbraucher 3 mit geringer Priorität und variablem Strombedarf (Klimaanlage), sowie einen Verbraucher 4 mit geringer Priorität und konstantem Strombedarf (Heckscheibenheizung). Beim Hochfahren des elektrischen Netzes erhält das Steuergerät 1 von jedem der Verbraucher 2-4 eine Leistungs-Spezifikations-Nachricht und errechnet daraus einen Gesamtstrombedarf von 25 Ampere. Da nicht sämtliche Verbraucher mit voller Leistung versorgt werden können, werden die Verbraucher 1 (Steuergerät) und 2 (Beleuchtung) mit hoher Priorität zuerst bedient. Die verbleibende Restleistung wird aufgeteilt auf die beiden Verbraucher 3,4 mit niedriger Priorität, wobei der Verbraucher 4 (Heckscheibenheizung) mit konstantem Strombedarf, sofern möglich, mit seiner Nennleistung und der Verbraucher 3 (Klimaanlage) mit variablem Strombedarf mit reduzierter Leistung betrieben wird.

### Beispiel 2

Das elektrische Netz umfasst unter anderem eine Klimaanlage 2 und eine Heckscheibenheizung 3, die gemäß ihrer Anforderung voll versorgt werden. Der Fahrzeugnutzer betätigt nun gleichzeitig mehrere Fensterheber 4, wodurch der Energiebedarf stark ansteigt. Der erhöhte Energiebedarf kann vom Fahrzeuggenerator aber nicht bereitgestellt werden. Aus der Leistungs-Spezifikations-Nachricht weiß das Steuergerät, dass der erhöhte Strombedarf der Fensterheber nur für kurze Zeit besteht und kann somit z.B. folgende Maßnahme treffen. Das Steuergerät 1 reduziert den Strombedarf der Klimaanlage 2 und der Heckscheibenheizung 3 durch Übermittlung eines entsprechenden Steuersignals an die Verbraucher 2,3 und teilt den Fensterhebern 4 kurzzeitig den benötigten Strombedarf zu. Nach der Betätigung der Fensterheber 4 wird der ursprüngliche Zustand wieder hergestellt. Dadurch wird das elektrische Netz 7 nicht überlastet. Die kurze Unterbrechung bzw. Reduzierung der Funktion der Klimaanlage und der Heckscheibenheizung wird vom Nutzer üblicherweise nicht bemerkt.

Für den Betrieb von Kommunikationsverbrauchern, d.h. Verbrauchern, die Kommunikationsressourcen benötigen, wie z.B. Steuergeräte oder Navigationssysteme, gelten die vorstehend genannten Grundsätze in analoger Weise. Die genannten Prinzipien des Managements sind auch auf Verbraucher anwendbar, die sowohl Leistungs- als Kommunikationsressourcen benötigen.

### Bezugszeichenliste

- 1: Steuergerät
- 2-4: Verbraucher
- 5: Kommunikationseinheit
- 6: Datenbus
- 7: elektrisches Netz
- 8: Management-Algorithmus
- 9: Stelleinrichtung
- 10-12: Verfahrensschritte
- U_{Bn}: Bordnetzspannung
- DF: DF-Signal
- SOC: Ladezustand der Batterie
- SOH: Alterungszustand der Batterie
- T_{Bat}: Batterietemperatur

## Patentansprüche

1. Verfahren zum Verwalten des Energiebedarfs elektrischer Verbraucher (2-4) in einem elektrischen Netz (7), insbesondere einem Kfz-Bordnetz, **gekennzeichnet durch** folgende Schritte:
- Übertragen einer Leistungs-Spezifikations-Nachricht (10) und einer Prioritätsinformation von wenigstens einem Verbraucher (2-4) an eine zentrale Verwaltungseinrichtung (1),
- wobei die Verwaltungseinrichtung (1) die Daten verarbeitet und in Abhängigkeit von der Auslastung des elektrischen Netzes (7), der Leistungs-Spezifikation und/oder der Priorität (P) des Verbrauchers (2-4) dem Verbraucher (2-4) eine bestimmte Energiemenge zuordnet, und
- Übertragen eines Steuersignals, mit dem der Leistungsverbrauch des Verbrauchers (2-4) eingestellt wird, an eine Kommunikationseinheit (5) oder eine Stelleinrichtung (9) des Verbrauchers (2-4).

2. Verfahren nach Anspruch 1, **dadurch gekennzeichnet, dass** die Leistungs-Spezifikation bei Verbrauchern (2-4) mit variablem Leistungsbedarf wenigstens eine Angabe über den mittleren, den maximalen und/oder den minimalen Leistungsbedarf enthält.

3. Verfahren nach Anspruch 1 oder 2, **dadurch gekennzeichnet, dass** die Leistungs-Spezifikation eine Angabe über den Zeitraum des Leistungsbedarfs und/oder die zeitliche Änderung des Leistungsbedarfs umfasst.

4. Verfahren nach einem der vorhergehenden Ansprüche, **dadurch gekennzeichnet, dass** die Leistungs-Spezifikation zusätzliche Parameter bezüglich des Leistungsbedarfs oder der Priorität des Verbrauchers (2-4) umfasst.

5. Verfahren nach einem der vorhergehenden Ansprüche, **dadurch gekennzeichnet, dass** die Verwaltungseinheit (1) ein Scheduling-Verfahren anwendet, um den einzelnen Verbrauchern (2-4) eine bestimmte Energiemenge zuzuordnen.

6. Verfahren nach einem der vorhergehenden Ansprüche, **dadurch gekennzeichnet, dass** die Verwaltungseinheit (1) ein Verfahren zum statistischen Multiplexing der Verbraucher-Anforderungen anwendet.

7. Verfahren nach einem der vorhergehenden Ansprüche, **dadurch gekennzeichnet, dass** die Verwaltungseinheit (1) in Reaktion auf eine Leistungs-Spezifikations-Nachricht (10) ein Steuersignal (12) an die Kommunikationseinheit (5) dieses Verbrauchers (2-4) und eines anderen Verbrauchers (2-4) sendet, um den Energieverbrauch des anderen Verbrauchers zugunsten des ersten Verbrauchers (2-4) zu reduzieren.

8. Verfahren nach einem der vorhergehenden Ansprüche, **dadurch gekennzeichnet, dass** die Kommunikation zwischen den Verbrauchern (2-4) und der Verwaltungseinheit (1) über einen digitalen Datenbus (6) oder über das elektrische Netz erfolgt.

9. Verfahren nach einem der vorhergehenden Ansprüche, **dadurch gekennzeichnet, dass** ein Verbraucher (2-4) mit Bedarf an Kommunikationsressourcen eine Kommunikations-Spezifikations-Nachricht an die Verwaltungseinrichtung (1) überträgt, wobei die Verwaltungseinrichtung (1) in Abhängigkeit von der Auslastung des Kommunikationsnetzes (6), der Kommunikationsspezifikation und der Priorität des Verbrauchers (2-4) dem Verbraucher eine bestimmte Nutzung des Kommunikationsnetzes zuordnet und ein Steuersignal an den Verbraucher (2-4) überträgt, mit dem das zukünftige Kommunikationsverhalten des Verbrauchers (2-4) eingestellt wird.

10. Verfahren nach einem der vorhergehenden Ansprüche, **dadurch gekennzeichnet, dass** die Informationen der Leistungs-Spezifikations-Nachricht und der Kommunikations-Spezifikations-Nachricht in einer gemeinsamen Spezifikations-Nachricht zusammengefasst werden.

11. Fahrzeug-Bordnetz mit mehreren elektrischen Verbrauchern (2-4) und wenigstens einer zentralen Verwaltungseinrichtung (1), **dadurch gekennzeichnet, dass** die Verbraucher (2-4) und die Verwaltungseinrichtung (1) jeweils eine Kommunikationseinheit (5) aufweisen, die zum Datenaustausch an einer gemeinsamen Kommunikationsverbindung (6) angeschlossen ist, und dass die Verbraucher (2-4) eine Leistungs-Spezifikations-Nachricht (10) und eine Prioritätsinformation oder äquivalente Informationen an die zentrale Verwaltungseinrichtung (1) übertragen, wobei die Verwaltungseinrichtung (1) diese Daten verarbeitet und in Abhängigkeit von der Auslastung des elektrischen Netzes (7), der Leistungsspezifikation (10) und der Priorität des Verbrauchers (2-4) dem Verbraucher (2-4) eine bestimmte Energiemenge zuordnet und ein Steuersignal erzeugt, mit dem die Leistung des Verbrauchers (2-4) eingestellt wird.
